# EUROPÄISCHE PATENTSCHRIFT

(11) **EP 3 607 194 B1**
(45) Veröffentlichungstag und Bekanntmachung des Hinweises auf die Patenterteilung: **13.10.2021**
(21) Anmeldenummer: 18716242.5
(22) Anmeldetag: 05.04.2018
(51) Int. Cl.: F02D 41/14, F02B 37/24, F02D 41/00

(54) **VERFAHREN ZUM BETREIBEN EINER VERBRENNUNGSKRAFTMASCHINE MIT EINEM ABGASTURBOLADER MIT VARIABLER TURBINENGEOMETRIE UNTER BERÜCKSICHTIGUNG DES ABGASGEGENDRUCKS**
METHOD FOR OPERATING AN INTERNAL COMBUSTION ENGINE WITH AN EXHAUST-GAS TURBOCHARGER HAVING VARIABLE TURBINE GEOMETRY TAKING INTO CONSIDERATION THE EXHAUST-GAS BACK PRESSURE
PROCÉDÉ SERVANT À FAIRE FONCTIONNER UNE MACHINE À COMBUSTION INTERNE ÉQUIPÉE D'UN TURBOCOMPRESSEUR À GAZ D'ÉCHAPPEMENT À GÉOMÉTRIE DE TURBINE VARIABLE EN TENANT COMPTE DE LA CONTREPRESSION DE GAZ D'ÉCHAPPEMENT

(30) Priorität: 05.04.2017 DE 102017107297
(43) Veröffentlichungstag der Anmeldung: 12.02.2020
(73) Patentinhaber: Volkswagen Aktiengesellschaft, 38440 Wolfsburg (DE)
(72) Erfinder: HEINKEN, Sebastian, 38106 Braunschweig (DE); KREFT, Matthias, 38440 Wolfsburg (DE)
(74) Vertreter: Gulde & Partner
(86) Internationale Anmeldenummer: PCT/EP2018/058738
(87) Internationale Veröffentlichungsnummer: WO 2018/185225

(56) Entgegenhaltungen:
- DE-A1- 10 010 978
- DE-C1- 4 025 901
- DE-C1- 19 531 871
- FR-A3- 2 910 542

## Beschreibung

Die Erfindung betrifft ein Verfahren zum Betreiben einer Verbrennungskraftmaschine mit einem Abgasturbolader zur Verdichtung der der Verbrennungskraftmaschine zugeführten Luft, wobei eine Antriebsleistung einer Turbine des Abgasturboladers in einem Abgasstrang der Verbrennungskraftmaschine durch Variation einer Turbinengeometrie der Turbine verändert wird.

Die Druckschrift EP 1 471 234 A2 beschreibt bereits einen Abgasturbolader (ATL), der zur Verdichtung der einer Verbrennungskraftmaschine zugeführten Luft vorgesehen ist. Dabei wird eine Antriebsleistung einer Turbine des Abgasturboladers in einem Abgasstrang der Verbrennungskraftmaschine (VKM) durch Variation einer Turbinengeometrie verändert. Man spricht in diesem Zusammenhang auch von einem Abgasturbolader (ATL) mit einer Turbine mit variabler Turbinengeometrie (VTG), die zusammengefasst als VTG-ATL abgekürzt wird. Dabei trifft das über die Turbine fließende Abgas auf Leitschaufeln, die verstellbar sind und damit den Turbinenwirkungsgrad verändern können. Wenn die Brennkraftmaschine ein Fahrzeug antreibt, werden die Leitschaufeln beim Beschleunigen des Fahrzeugs so verstellt, dass sich eine kleine effektive Öffnungsquerschnittsfläche der Turbine ergibt, die den Abgasgegendruck vor der Turbine und die Fließgeschwindigkeit des Abgases stark ansteigen lässt. Das in der Druckschrift beschriebene Verfahren schlägt zum Betreiben einer Brennkraftmaschine mit einem Abgasturbolader zur Verdichtung der zugeführten Luft vor, dass ein Druckverhältnis zwischen einem Druck in Strömungsrichtung des Abgases im Abgasstrang nach der Turbine und einem Druck in Strömungsrichtung des Abgases im Abgasstrang vor der Turbine vorgegeben wird und dass in Abhängigkeit dieses Druckverhältnisses ein Grenzwert für eine Stellgröße eines Stellgliedes zur Einstellung der Turbinengeometrie ermittelt wird. Wird diese Technologie bei mit Dieselkraftstoff betriebenen Fahrzeugen verwendet, spricht man von Zuführung der Verbrennungsluft mit Diesel-VTG-ATL und analog dazu spricht man bei mit Ottokraftstoff betriebenen Fahrzeugen von Zuführung der Verbrennungsluft mit Otto-VTG-ATL.

Nachteilig bei diesem bereits bekannten Verfahren ist es, dass die Stellgröße des Stellgliedes zur Einstellung der Turbinengeometrie lediglich aus einer rechnerischen Größe, die auf dem ermittelten Druck in Strömungsrichtung des Abgases im Abgasstrang nach der Turbine und dem Druck in Strömungsrichtung des Abgases im Abgasstrang vor der Turbine beruht, ermittelt wird. Wie bereits erläutert, kann es beim Betrieb der Verbrennungskraftmaschine mit VTG-ATL zu hohen Abgasgegendrücken kommen, die einen hohen Restgasgehalt im Brennraum verursachen und zum anderen die Ladedruckregelung in den dynamischen Zuständen verschlechtern. Insbesondere solche dynamischen Zustände, in denen eine Verschlechterung der Ladedruckregelung verursacht wird, werden in dem herkömmlichen Verfahren nicht berücksichtigt.

Die Druckschrift EP 1 586 756 A1 beschreibt ebenfalls ein Verfahren und eine Vorrichtung zum Betreiben einer Brennkraftmaschine, die eine maximale Beschleunigung ohne Wirkungsgradverlust eines Abgasturboladers VTG-ATL ermöglichen. Die Brennkraftmaschine umfasst einen Verdichter eines Abgasturboladers zur Verdichtung der der Brennkraftmaschine zugeführten Luft und ein Stellglied zur Einstellung eines Soll-Ladedruckes am Ausgang des Verdichters. Das Stellglied wird in Abhängigkeit eines einzustellenden Abgasgegendruckes in einem Abgasstrang der Brennkraftmaschine angesteuert. Vorgesehen ist, dass in Abhängigkeit des Soll-Ladedruckes ein Solldruckverhältnis über dem Verdichter ermittelt wird, dass in Abhängigkeit des Solldruckverhältnisses über dem Verdichter ein Sollexpansionsverhältnis über der Turbine mit variabler Turbinengeometrie des Abgasturboladers ermittelt wird, wobei das Sollexpansionsverhältnis das Verhältnis zwischen dem einzustellenden Abgasgegendruck und dem Druck am Ausgang der Turbine beschreibt, und dass das Stellglied abhängig von dem Sollexpansionsverhältnis angesteuert wird. Nachteilig ist auch hier, dass die Stellgröße des Stellgliedes zur Einstellung der Turbinengeometrie ebenfalls lediglich aus einer rechnerischen Größe, die auf dem ermittelten Druck in Strömungsrichtung des Abgases im Abgasstrang nach der Turbine und dem Druck in Strömungsrichtung des Abgases im Abgasstrang vor der Turbine beruht, ermittelt wird.

Die Druckschrift DE 195 31 871 C1 beschreibt ein Verfahren zum Betreiben einer Verbrennungskraftmaschine mit einem Abgasturbolader zur Verdichtung der der Verbrennungskraftmaschine zugeführten Luft, wobei eine Antriebsleistung einer Turbine des Abgasturboladers in einem Abgasstrang der Verbrennungskraftmaschine durch Variation einer Turbinengeometrie der Turbine verändert wird, wobei in einem ersten Regelalgorithmus ein Soll-Ladedruck am Ausgang des Verdichters des Abgasturboladers im Luftzuführungsstrang stromauf des Verbrennungsmotors in Abhängigkeit eines in einem Abgasstrang stromab des Verbrennungsmotors vor der Turbine der Verbrennungskraftmaschine einzustellenden Soll-Abgasgegendrucks angesteuert wird, wobei dem Soll-Ladedruck eine Öffnungsquerschnittsfläche der Turbine zugeordnet ist, die über einen Stellhub eines der Turbine zugeordneten Stellgliedes in Abhängigkeit eines dem vorgegebenen Soll-Ladedruck zugeordneten Sollwertes angesteuert wird.

Die Druckschrift FR 2 910 542 A3 offenbart ebenfalls ein Verfahren zum Regeln des Ladedrucks in einer Verbrennungsmaschine mit Abgasturbolader, wobei der Abgasturbolader über Variation der Turbinengeometrie angesteuert werden kann. Es wird ein Abgasgegendruck stromauf der Turbine bei der Regelung des Ladedruckes berücksichtigt. Im Falle einer starken Variation (Abweichung Ist-Sollwert) sowohl des Ladedrucks, als auch des Abgasgegendruckes, wird die Regelung des Abgasturboladers dahingehend modifiziert, dass eine Limitierung des Abgasgegendruckes erfolgt.

Der Erfindung liegt vom Stand der Technik ausgehend die Aufgabe zugrunde, ein Verfahren anzugeben, welches den Abgasgegendruck vor der Turbine in gewünschter Weise beeinflusst und zugleich dynamische Zustände beim Betrieb der Verbrennungskraftmaschine berücksichtigt.

Ausgangspunkt der Erfindung ist ein Verfahren zum Betreiben einer Verbrennungskraftmaschine mit einem Abgasturbolader zur Verdichtung der der Verbrennungskraftmaschine zugeführten Luft, wobei eine Antriebsleistung einer Turbine des Abgasturboladers in einem Abgasstrang der Verbrennungskraftmaschine durch Variation einer Turbinengeometrie der Turbine verändert wird, wobei in einem ersten Regelalgorithmus ein Soll-Ladedruck am Ausgang des Verdichters des Abgasturboladers im Luftzuführungsstrang stromauf des Verbrennungsmotors in Abhängigkeit eines in einem Abgasstrang stromab des Verbrennungsmotors vor der Turbine der Verbrennungskraftmaschine einzustellenden Soll-Abgasgegendrucks angesteuert wird, wobei dem Soll-Ladedruck eine Öffnungsquerschnittsfläche der Turbine zugeordnet ist, die über einen Stellhub eines der Turbine zugordneten Stellgliedes in Abhängigkeit eines dem vorgegebenen Soll-Ladedruck zugeordneten Sollwertes angesteuert wird.

Erfindungsgemäß ist vorgesehen, dass das über den ersten Regelalgorithmus angesteuerte Stellglied der Turbine über einen zweiten Regelalgorithmus unter Vorgabe eines oberen Grenzwertes des Soll-Abgasgegendrucks im Abgasstrang stromauf der Turbine durch Eingriff in den ersten Regelalgorithmus mit einem angepassten Sollwert angesteuert wird, wenn in einem primären Regelpfad des zweiten Regelalgorithmus eine Abgasgegendruck-Regelabweichung stromauf der Turbine auftritt, die aus einem Ist-Abgasgegendruck stromauf der Turbine und dem vorgegebenen Soll-Abgasgegendruck stromauf der Turbine gebildet wird.

In einem sekundären Regelpfad des zweiten Regelalgorithmus ist weiter vorgesehen, dass eine Ladedruck-Regelabweichung stromab des Verdichters auftritt, die aus einem Ist-Ladedruck des Verdichters und dem Soll-Ladedruck am Ausgang des Verdichters gebildet wird, wobei in einem ersten Subtrahier-Baustein innerhalb des primären Regelpfades des zweiten Regelalgorithmus der Ist-Abgasgegendruck stromauf der Turbine und der vorgegebene Soll-Abgasgegendruck zugeführt werden und die Abgasgegendruck-Regelabweichung ermittelt wird.

Die Abgasgegendruck-Regelabweichung des primären Regelpfades des zweiten Regelalgorithmus wird modifiziert, bevor sie einem zweiten Subtrahier-Baustein im Eingriffspunkt zugeführt wird, wobei die Abgasgegendruck-Regelabweichung mittels einer Kennlinie geglättet und mittels eines Tiefpassfilters gemäß einer Kennlinie in Abhängigkeit eines Umgebungsdrucks mit einem Verstärkungsfaktor versehen wird, so dass dem zweiten Subtrahier-Baustein im Eingriffspunkt eine modifizierte Abgasgegendruck-Regelabweichung übergeben wird.

Die modifizierte Regelabweichung und der dem vorgegebenen Soll-Ladedruck zugeordnete Sollwert des ersten Regelalgorithmus werden im Eingriffspunkt dem zweiten Subtrahier-Baustein zugeführt, und in dem Eingriffspunkt wird ein korrigierter Sollwert gebildet und der korrigierte Sollwert wird über einen Schalter ausgegeben, wobei der Stellhub des Stellgliedes der Turbine unter Berücksichtigung dynamischer Zustände der Verbrennungskraftmaschine im Eingriffspunkt nur dann korrigiert wird, wenn die Ausgänge des primären Regelpfades und des sekundären Regelpfades aktiv geschaltet und der Schalter geschlossen wird.

Es ist bevorzugt vorgesehen, dass die Regelabweichung in dem primären Regelpfad und die Regelabweichung in dem sekundären Regelpfad des zweiten Regelalgorithmus, nachdem sie jeweils einen vorgebbaren Schwellenwert je eines den Regelpfaden zugeordneten Hystereseblocks überschritten haben, aktiv geschaltet und über eine "und"-Verknüpfung auf den Schalter des Eingriffspunktes geführt werden, wobei der Schalter nur geschlossen wird, wenn beide Regelabweichungen aktiv sind, so dass ein Eingriff des zweiten Regelalgorithmus in den ersten Regelalgorithmus im Eingriffspunkt nur dann erfolgt, wenn der Schalter geschlossen ist.

Die Erfindung betrifft ferner eine Verbrennungskraftmaschine, die zur Durchführung des Verfahrens eingerichtet ist, umfassend einen Abgasturbolader zur Verdichtung der der Verbrennungskraftmaschine zugeführten Luft, einen Verdichter, einen Verbrennungsmotor und eine Turbine mit variabler Turbinengeometrie, die über eine Welle mit dem Verdichter verbunden ist, und eine Steuereinrichtung, in der ein computerlesbarer Programmalgorithmus zur Ausführung des Verfahrens und gegebenenfalls erforderliche Kennfelder gespeichert sind.

Die Erfindung wird nachfolgend anhand der zugehörigen Figuren erläutert. Es zeigen:
- Figur 1: eine schematische Ansicht einer Verbrennungskraftmaschine mit den zugehörigen Komponenten zur Durchführung des Verfahrens und
- Figur 2: ein Funktionsdiagramm zur Erläuterung des erfindungsgemäßen Verfahrens und der zugehörigen Verbrennungskraftmaschine mit ihren zugehörigen Komponenten.

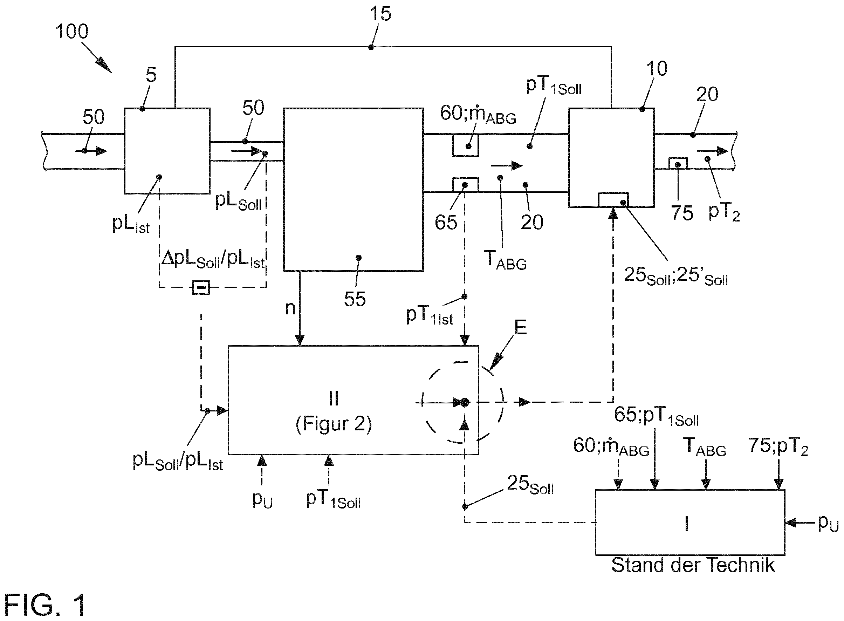

In Figur 1 ist eine Verbrennungskraftmaschine mit dem Bezugszeichen 100 gekennzeichnet.

Die Verbrennungskraftmaschine 100 umfasst einen Verbrennungsmotor 55, der beispielsweise als Ottomotor oder als Dieselmotor ausgebildet sein kann. Dem Verbrennungsmotor 55 wird über einen Luftzuführungsstrang 50 Frischluft in Pfeilrichtung zugeführt. Dabei ist in dem Luftzuführungsstrang 50 ein Verdichter 5 eines Abgasturboladers zur Verdichtung der dem Verbrennungsmotor 55 zugeführten Frischluft angeordnet. Der Abgasturbolader wird über eine Welle 15 von einer Turbine 10, die in einem Abgasstrang 20 der Verbrennungskraftmaschine 100 angeordnet ist, angetrieben. Der Abgasturbolader umfasst somit den Verdichter 5, die Welle 15 und die Turbine 10.

Die Turbine 10 wird von einem Abgasmassenstrom ṁ_{AGB} im Abgasstrang 20 angetrieben. Die Strömungsrichtung des Abgases und damit des Abgasmassenstromes ṁ_{ABG} ist in Figur 1 ebenfalls durch Pfeile gekennzeichnet.

In Strömungsrichtung des Abgases herrscht im Abgasstrang 20 vor der Turbine 10 ein erster Druck pT_{1Ist} und eine bestimmte Abgastemperatur T_{ABG}.

In Strömungsrichtung des Abgases herrscht in Abgasstrang 20 nach der Turbine 10 ein zweiter Druck pT₂.

Der Abgasmassenstrom ṁ_{ABG} kann in bekannter Weise mittels eines nicht dargestellten Massenstrommessers 60 gemessen oder modelliert werden.

Der erste Druck pT_{1Ist} kann in bekannter Weise mittels eines Drucksensors 65 gemessen oder auf verschiedene Weise modelliert werden.

Der zweite pT_{2Ist} kann in bekannter Weise mittels eines Drucksensors 75 gemessen oder auf verschiedene Weise modelliert werden.

Zur Umsetzung eines vorgegebenen Soll-Ladedrucks pL_{Soll} in der Luftzufuhr 50 in Strömungsrichtung der Frischluft stromab des Laders 5 wird ein Stellglied 25 der Turbine 10 angesteuert. Das Stellglied 25 verstellt in bekannter Weise Leitschaufeln der Turbine 10 und verändert damit den Turbinenwirkungsgrad und die effektive Öffnungsquerschnittsfläche der Turbine 10.

Die Verstellung der Leitschaufeln der Turbine 10 erfolgt über eine Stellgröße beziehungsweise einen Stellhub des Stellgliedes 25.

Bei der herkömmlichen Vorgehensweise wird zur Umsetzung des vorgegebenen Soll-Ladedrucks pL_{Soll} des Laders 5 ein Sollwert 25_{Soll} für den Stellhub des Stellgliedes 25 vorgegeben. Die Leitschaufeln der Turbine 10 werden dann aufgrund des umgesetzten Sollwertes 25_{Soll} des Stellhubes so eingestellt, dass der resultierende Turbinenwirkungsgrad zu dem gewünschten Soll-Ladedruck pL_{Soll} des Laders 5 führt.

Mit Hilfe der physikalischen Zusammenhänge zwischen dem ersten Druck pT_{1Ist} vor der Turbine 10, also dem Abgasgegendruck, dem Abgasmassenstrom ṁ_{ABG} im Abgasstrang 20 und einem Istwert 25_{Ist} für den Stellhub der Stellgliedes 25 lässt sich ein Grenzwert für den Stellhub des Stellgliedes 25 in Bezug auf eine maximale Turbinenleistung aus einem vorgegebenen Druckverhältnis pT_{1Ist}-pT_{2Ist} ermitteln. Die bei dieser Vorgehensweise berücksichtigten Zustände gelten jedoch nur im eingeschwungenen Zustand der Verbrennungskraftmaschine 100, wie in der Druckschrift EP 1 471 234 A2 auch offenbart wird, wobei nur das Druckverhältnis pT_{1Ist}-pT_{2Ist} im Abgasstrang 20 berücksichtigt wird.

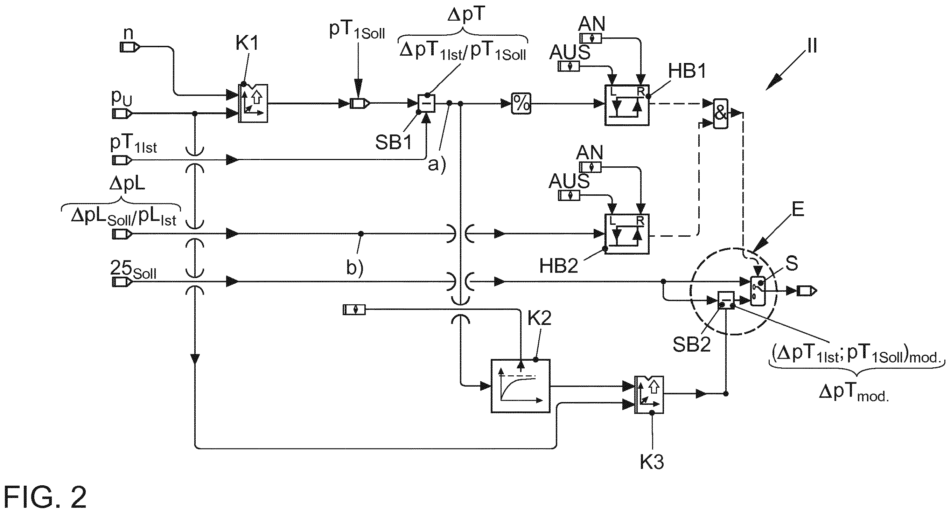

Zur Verbesserung schlägt die Erfindung ein Verfahren vor, welches den Abgasgegendruck Druck pT_{1Ist} vor der Turbine 10 derart beeinflusst, so dass in vorteilhafter Weise dynamische Zustände beim Betrieb der Verbrennungskraftmaschine 100 Berücksichtigung finden, wie nachfolgend anhand der Figuren 1 und 2 in einer Zusammenschau weiter erläutert wird.

Das erfindungsgemäße Verfahren bedient sich eines Abgasgegendruck-Regelalgorithmus I, der insbesondere bei dynamischen Betriebszuständen, die durch eine Regelabweichung ΔpL zwischen dem Ist-Ladedruck pL_{Ist} des Laders 5 und dem Soll-Ladedruck pL_{Soll} des Laders 5 vorliegen und erkannt werden, durch einen Regelalgorithmus II gemäß Figur 2 überlagert wird, wie nachfolgend detailliert erläutert wird.

Der Abgasgegendruck-Regelalgorithmus I kann der bereits erläuterte Abgasgegendruck-Regelalgorithmus I oder ein anderer aus dem Stand der Technik bekannter Abgasgegendruck-Regelalgorithmus sein.

Der erfindungsgemäße Regelalgorithmus II gemäß den Figuren 1 und 2 im Detail bedient sich folgender Eingangsparameter.

Mittels eines nicht dargestellten Drehzahlsensors wird eine Motordrehzahl n des Verbrennungsmotors 55 ermittelt.

Mittels eines nicht dargestellten Drucksensors wird außerdem ein Umgebungsdruck p_{U} bereit gestellt.

Wie bereits erläutert, wird der erste Druck pT_{1Ist} (Abgasgegendruck (stromauf) vor der Turbine 10) mittels des Drucksensors 65 gemessen oder auf verschiedene Weise modelliert und als Modellgröße zur Verfügung gestellt.

Zudem werden mittels nicht dargestellter Drucksensoren der Ist-Ladedruck pL_{Ist} des Laders 5 und der Soll-Ladedruck pL_{Soll} des Laders 5 gemessen und es wird in einem sekundären Ladedruck-Regelpfad b) die Regelabweichung ΔpL = (pL_{Soll}-pL_{Ist}) ermittelt, die ebenfalls als Eingangsparameter für den Regelalgorithmus II zur Verfügung steht.

Ist die Regelabweichung ΔpL = 0, weist der Ist-Ladedruck pL_{Ist} den gewünschten Soll-Wert auf, so dass ein Eingriff in den Regelalgorithmus I nicht notwendig ist, da sich der Ladedruck-Regelpfad b) mit der Regelabweichung ΔpL = 0 in einem eingeschwungenen Zustand befindet.

Ist die Regelabweichung ΔpL > 0, weist der Ist-Ladedruck pL_{Ist} nicht den gewünschten Soll-Wert auf, so dass ein Eingriff in den bisherigen Regelalgorithmus I notwendig ist, da sich der Ladedruck-Regelpfad b) bei einer Regelabweichung ΔpL > 0 nicht in einem eingeschwungenen Zustand befindet.

Schließlich wird dem neuen Regelalgorithmus der aus dem bisherigen Regelalgorithmus I bekannte Sollwert 25_{Soll} für den Stellhub des Stellgliedes 25 zur Verfügung gestellt.

Es versteht sich, dass der Sollwert 25_{Soll} für den Stellhub des Stellgliedes 25 ein nach dem Verfahren der Druckschrift EP 1 471 234 A2 ermittelter Sollwert sein kann. Es wird jedoch noch einmal angemerkt, dass das erfindungsgemäße Verfahren auch für andere bekannte Verfahren gleichermaßen einsetzbar ist, die den Sollwert für den Stellhub des Stellgliedes 25 auf andere als die in der Druckschrift EP 1 471 234 A2 beschriebene Weise ermitteln.

Gemäß der Erfindung werden innerhalb des neuen Regelalgorithmus II der bereits erwähnte sekundäre Ladedruck-Regelpfad b) und ein primärer Regelpfad a) verfolgt.

Der primäre Abgasgegendruck-Regelpfad a) betrifft die Regelabweichung ΔpT = (pT_{1Soll}-pT_{1Ist}) eines Ist-Abgasgegendrucks pT_{1Ist} vor der Turbine 10 (stromab des Verbrennungsmotors 55) gegenüber einem Soll-Abgasgegendruck pT_{1Soll} vor der Turbine 10.

Der Soll-Abgasgegendruck pT_{1Soll} wird als einzuhaltender Wert, insbesondere als vorgebbarer oberer Grenzwert, dem Abgasgegendruck-Regelpfad a) des Regelalgorithmus II) (vergleiche Figur 2) in Abhängigkeit des Umgebungsdrucks pu und in Abhängigkeit von der Drehzahl n des Verbrennungsmotors 55 (vergleiche Kennlinie K1) einem Subtrahier-Baustein SB1 zur Ermittlung der Regelabweichung ΔpT = (pT_{1Soll}-pT_{1Ist}) zugeführt.

Ist die Regelabweichung ΔpT des Abgasgegendrucks vor der Turbine 10 = 0, so ist ein Eingriff des zweiten Regelalgorithmus II auf den bisherigen Regelalgorithmus I in Abhängigkeit des Abgasgegendruck-Regelpfads a) nicht notwendig, da sich die Abgasgegendruckregelung bei einer Regelabweichung ΔpT = 0 im gewünschten eingeschwungenen Zustand befindet.

Ist die Regelabweichung ΔpT des Abgasgegendrucks vor der Turbine 10 > 0, so ist ein Eingriff des zweiten Regelalgorithmus II auf den bisherigen Regelalgorithmus I in Abhängigkeit des Abgasgegendruck-Regelpfads a) notwendig, da sich die Abgasgegendruckregelung bei einer Regelabweichung ΔpT > 0 nicht im gewünschten eingeschwungenen Zustand befindet.

Die ermittelte Regelabweichung ΔpT > 0 des Abgasgegendrucks vor der Turbine 10 wird auf einen Hystereseblock B1 geführt, der prüft, ob sich die Regelabweichung ΔpT_{1Ist}-pT_{1Soll} > 0 in einem ersten Band mit geringer Regelabweichung oder durch Überschreiten eines vorgebbaren Schwellenwertes in einem zweiten Band mit größerer Regelabweichung befindet. Nur wenn festgestellt wird, dass eine größere Regelabweichung vorliegt, wird ein Ausgang des Hystereseblocks HB1 aktiv, das heißt angeschaltet. Damit werden in vorteilhafter Weise geringe Regelabweichungen ΔpT> 0 des Abgasgegendruck-Regelpfads a) nicht berücksichtigt. Der Ausgang des Hystereseblocks B1 wird aktiv geschaltet, wenn die ermittelte Regelabweichung ΔpT > 0 den voreingestellten Grenzwert (den Schwellenwert) überschreitet.

Analog dazu wird die ermittelte Regelabweichung ΔpL = (pL_{Soll}-pL_{Ist}) > 0 des Ist-Ladedrucks pL_{Ist} gegenüber dem Soll-Ladedruck pL_{Soll} ebenfalls auf einen Hystereseblock HB2 geführt, der prüft, ob sich die Regelabweichung ΔpL > 0 in einem ersten Band mit geringer Regelabweichung oder in einem zweiten Band mit größerer Regelabweichung befindet. Nur wenn festgestellt wird, dass eine größere Regelabweichung oberhalb eines vorgebbaren Schwellenwertes im zweiten Band vorliegt, wird ein Ausgang des Hystereseblocks B2 aktiv, das heißt angeschaltet. Damit werden in vorteilhafter Weise geringe Regelabweichungen ΔpL > 0 des Ladedruck-Regelpfads b) nicht berücksichtigt. Der Ausgang des Hystereseblocks B2 wird aktiv geschaltet, wenn die ermittelte Regelabweichung ΔpT > 0 den voreingestellten Grenzwert (den Schwellenwert) überschreitet.

Durch die Hystereseblöcke HB1, HB2 werden schnelle Wiederholungen von Ein- und Ausschaltvorgängen, das heißt schnelles Aktivieren und Deaktivieren der Regelpfade a), b), vermieden.

Erfindungsgemäß wird der neue Regelalgorithmus II nur dann aktiv geschaltet, wenn beide Ausgänge, der Ausgang des primären Regelpfades a) und des sekundären Regelpfades b) (&), aktiv geschaltet sind.

Dadurch wird gleichzeitig erkannt, ob überhaupt eine Abgasgegendruck-Regelabweichung ΔpT_{1Soll}-pT_{1Ist} > 0 des Abgasgegendrucks pT_{1Ist} vorliegt und ob ein dynamischer Betriebszustand im Betrieb der Verbrennungskraftmaschine 100, das heißt eine Ladedruck-Regelabweichung ΔpL_{Soll}-pL_{Ist} > 0, vorliegt. Nur dann wird auch ein Freigabebefehl ausgegeben, der durch die &-Verknüpfung in Figur 2 verdeutlicht wird.

Durch den Freigabebefehl wird einem Eingriffspunkt E der herkömmliche Sollwert 25_{Soll} für den Stellhub des Stellgliedes 25 durch Umschaltung eines Schalters S für einen möglichen Eingriff funktionell freigegeben. Mit anderen Worten, der in Figur 2 dargestellte Schalter S wird ausgehend von der dargestellten nicht geschalteten Stellung umgeschaltet und der erfindungsgemäße Eingriff ist möglich.

Der Schalter S ist dann auf die im Eingriffspunkt E dargestellte Regelabweichung ΔpT = (ΔpT_{1Ist}-pT_{1Soll}) des Abgasgegendrucks pT_{1Ist} vor der Turbine 10 auf einen weiteren Subtrahier-Baustein SB2 geschaltet.

Dadurch kann jetzt in Abhängigkeit der Regelabweichung ΔpT_{1Ist}-pT_{1Soll} hinter dem ersten Subtrahier-Baustein SB1 des primären Regelungspfades a) der herkömmliche Sollwert 25_{Soll} mittels des Subtrahier-Bausteins SB2 als Korrekturwert entsprechend der im zweiten Subtrahier-Baustein SB2 vorliegenden Abweichung ein korrigierter Sollwert 25'_{Soll} ausgegeben werden, das heißt, der herkömmliche Sollwert 25_{Soll} wird in Abhängigkeit von aufgetretenen dynamischen Zuständen geändert, insbesondere der Ladedruck-Regelabweichung ΔpL> 0 gemäß dem sekundären Regelpfad b) geändert, jedoch nur dann, wenn eine Abgasgegendruck-Regelabweichung ΔpT > 0 im primären Regelpfad a) überhaupt vorliegt.

Mit anderen Worten, die Leitschaufeln der Turbine 10 werden dann aufgrund des erfindungsgemäßen Sollwertes 25'_{Soll} des Stellhubes so eingestellt, dass der resultierende Turbinenwirkungsgrad zudem einer optimalen Turbinenleistung der Turbine 10 in Abhängigkeit des gewünschten Soll-Abgasgegendrucks ΔpT_{1Soll} und in Abhängigkeit dynamischer Zustände in dem sekundären Regelpfad b) des neuen Regelalgorithmus II zu einem korrespondierenden Soll-Ladedruck pL_{Soll} des Laders 5 vor dem Verbrennungsmotor 55 führt.

In vorteilhafter Weise wird jetzt der Abgasgegendruck pT_{1Ist} vor der Turbine 10 aktiv in Abhängigkeit der Regelabweichung ΔpT > 0 oberhalb eines vorgebbaren Bandes des ersten Hystereseblocks HB1 des Abgasgegendrucks pT_{1Soll} und in Abhängigkeit einer Ladedruck-Regelabweichung ΔpL > 0 oberhalb eines vorgebbaren Bandes des zweiten Hystereseblocks HB2 geregelt.

Dabei wird die Abgasgegendruck-Regelabweichung ΔpT, bevor sie dem zweiten Subtrahier-Baustein SB2 im Eingriffspunkt E zugeführt wird, gewichtet.

Die Gewichtung erfolgt durch Modifikation der Abgasgegendruck-Regelabweichung (ΔpT_{mod}.) (pT_{1Soll}-pT_{1Ist})_{mod.}, indem die Abgasgegendruck-Regelabweichung ΔpT = (pT_{1Soll}-pT_{1Ist}) gemäß der Kennlinie K2 über einen Tiefpassfilter geglättet und gemäß der Kennlinie 3 in Abhängigkeit des Umgebungsdrucks pu mit einem Verstärkungsfaktor versehen wird.

Durch das Verfahren wird in vorteilhafter Weise dafür gesorgt, dass die Ansteuerung des VTG-ATL mittels des ermittelten oder modellierten Abgasgegendrucks pT_{1Ist} dahingehend beeinflusst wird, dass ein zu hohes Aufstauen des Abgasgegendrucks pT_{1Ist} vermieden wird. Dadurch wird der Effekt erzielt, dass der Restgasgehalt in einem Brennraum eines Zylinders des Verbrennungsmotors 55 effektiv reduziert wird.

Außerdem wird eine Verbesserung der Laufruhe und des Verbrennungswirkungsgrades sowie die Regelbarkeit des VTG-ATLs verbessert, da es durch das Verfahren zu einer Reduzierung von Ladedrucküberschwingern kommt.

Der Einsatz des Abgasgegendrucksensors zur Bestimmung des Abgasgegendrucks pT_{1Ist} beziehungsweise der Einsatz eines Modellwertes des Abgasgegendrucks pT_{1Ist} in Kombination mit einer Ottomotor-VTG-ATL oder Diesel-VTG-ATL gemäß dem Verfahren stellt eine neue Maßnahme bei der Steuerung und Regelung dar.

In vorteilhafter Weise können durch die aktive Regelung des Abgasgegendrucks pT_{1Ist} alle Toleranzen und Bauteilstreuungen des Verbrennungsmotors 55 und des VTG-ATL der Abgasanlage berücksichtigt werden.

In vorteilhafter Weise verbessert sich die Fahrdynamik des Fahrzeugs, da die Motorsteuerung über die in Abhängigkeit des Ladedrucks pT_{1Ist} aktive Regelung des Abgasgegendrucks pT_{1Ist} hinsichtlich des Drehmomentaufbaus optimiert wird und nicht wie bisher ausschließlich über die Abgasgegendruckregelung. Dadurch verbessert sich schließlich das Fahrverhalten, weil das Fahrzeug bei Verwendung des Verfahrens harmonischer beschleunigt, da dynamische Zustände berücksichtigt werden.

Durch das Verfahren kann ein Maximum an Turbinenleistung der Turbine 10 unter gleichzeitiger Einhaltung des Sollwertes 25'_{Soll} des Stellhubes für die Leitschaufeln der Turbine 10 generiert werden, wobei eine Optimierung des Abgasgegendrucks pT_{1Ist} auch eine Maximierung des Abgasmassenstroms ṁ_{AGB} im Abgasstrang 20 ermöglicht.

### Bezugszeichenliste

- 100: Verbrennungskraftmaschine
- 5: Verdichter
- 10: Turbine
- 15: Welle
- 20: Abgasstrang
- 25: Stellglied
- 25_{Soll}: Sollwert des Stellgliedes
- 25'_{Soll}: korrigierter Sollwert des Stellgliedes 25
- 50: Luftzuführungsstrang
- 55: Verbrennungsmotor
- n: Motordrehzahl
- 60: Massenstrommesser
- 65: Drucksensor
- 75: Drucksensor
- ṁ_{ABG}: Abgasmassenstrom im Abgasstrang 20
- pT₁: erster Druck stromauf der Turbine 10
- T_{ABG}: Temperatur des Abgases stromauf der Turbine 10
- pT₂: zweiter Druck stromab der Turbine 10
- pT_{1Ist}: Ist-Abgasgegendruck stromauf der Turbine 10
- pT_{1Soll}: Soll-Abgasgegendruck stromauf der Turbine 10
- ΔpT = Δ(pT_{1Soll}-pT_{1Ist}): Regelabweichung ΔpT stromauf der Turbine
- ΔpT_{mod.}: modifizierte Abgasgegendruck-Regelabweichung
- pL_{Soll}: Soll-Ladedruck stromab des Verdichters 5
- pL_{Ist}: Ist-Ladedruck des Verdichters 5
- ΔpL =(pL_{Soll}-pL_{Ist}): Regelabweichung ΔpL stromab des Verdichters 5
- I: herkömmlicher Regelalgorithmus
- II: erfindungsgemäßer Regelalgorithmus
- a): primärer Regelpfad
- b): sekundärer Regelpfad
- pu: Umgebungsdruck
- SB1: erster Subtrahier-Baustein
- SB2: zweiter Subtrahier-Baustein
- HB1: Hystereseblock
- HB2: Hystereseblock
- E: Eingriffspunkt
- S: Schalter
- K1, K2, K3: Kennlinien

## Patentansprüche

1. Verfahren zum Betreiben einer Verbrennungskraftmaschine (100) mit einem Abgasturbolader (5, 10, 15) zur Verdichtung der der Verbrennungskraftmaschine (100) zugeführten Luft, wobei eine Antriebsleistung einer Turbine (10) des Abgasturboladers (5, 10, 15) in einem Abgasstrang (20) der Verbrennungskraftmaschine (100) durch Variation einer Turbinengeometrie der Turbine (10) verändert wird, wobei in einem ersten Regelalgorithmus (I) ein Soll-Ladedruck (pL_{Soll}) am Ausgang des Verdichters (5) des Abgasturboladers (5, 10, 15) im Luftzuführungsstrang (50) stromauf des Verbrennungsmotors (55) in Abhängigkeit eines in einem Abgasstrang (20) stromab des Verbrennungsmotors (55) vor der Turbine (10) der Verbrennungskraftmaschine (100) einzustellenden Soll-Abgasgegendrucks (pT_{1Soll}) angesteuert wird, wobei dem Soll-Ladedruck (pL_{Soll}) eine Öffnungsquerschnittsfläche der Turbine (10) zugeordnet ist, die über einen Stellhub eines der Turbine (10) zugordneten Stellgliedes (25) in Abhängigkeit eines dem vorgegebenen Soll-Ladedruck (pL_{Soll}) zugeordneten Sollwertes (25_{Soll}) angesteuert wird,
**dadurch gekennzeichnet, dass**
das über den ersten Regelalgorithmus (I) angesteuerte Stellglied (25) der Turbine (10) über einen zweiten Regelalgorithmus (II) unter Vorgabe eines oberen Grenzwertes des Soll-Abgasgegendrucks (pT_{1Soll}) im Abgasstrang (20) stromauf der Turbine (10) durch Eingriff in den ersten Regelalgorithmus (I) mit einem angepassten Sollwert (25'_{Soll}) angesteuert wird, wenn
• in einem primären Regelpfad a) des zweiten Regelalgorithmus (II) eine Abgasgegendruck-Regelabweichung (ΔpT) stromauf der Turbine (10) auftritt, die aus einem Ist-Abgasgegendruck (pT_{1Ist}) stromauf der Turbine (10) und dem vorgegebenen Soll-Abgasgegendruck (pT_{1Soll}) stromauf der Turbine (10) gebildet wird, und
• in einem sekundären Regelpfad b) des zweiten Regelalgorithmus (II) eine Ladedruck-Regelabweichung (ΔpL) stromab des Verdichters (5) auftritt, die aus einem Ist-Ladedruck (pL_{Ist}) des Verdichters (5) und dem Soll-Ladedruck (pL_{Soll}) am Ausgang des Verdichters (5) gebildet wird,
• wobei in einem ersten Subtrahier-Baustein (SB1) innerhalb des primären Regelpfades a) des zweiten Regelalgorithmus (II) der Ist-Abgasgegendruck (pT_{1Ist}) stromauf der Turbine (10) und der vorgegebene Soll-Abgasgegendruck (pT_{1Soll}) zugeführt werden und die Abgasgegendruck-Regelabweichung (ΔpT) ermittelt wird,
• wobei die Abgasgegendruck-Regelabweichung (ΔpT) des primären Regelpfades a) des zweiten Regelalgorithmus (II) modifiziert wird, bevor sie einem zweiten Subtrahier-Baustein (SB2) im Eingriffspunkt (E) zugeführt wird, wobei die Abgasgegendruck-Regelabweichung (ΔpT) mittels einer Kennlinie (K2) geglättet und mittels eines Tiefpassfilters gemäß einer Kennlinie (K3) in Abhängigkeit eines Umgebungsdrucks (pu) mit einem Verstärkungsfaktor versehen wird, so dass dem zweiten Subtrahier-Baustein (SB2) im Eingriffspunkt (E) eine modifizierte Abgasgegendruck-Regelabweichung (ΔpT_{mod.}) übergeben wird,
• wobei die modifizierte Regelabweichung (ΔpT_{mod.}) und der dem vorgegebenen Soll-Ladedruck (pL_{Soll}) zugeordnete Sollwert (25_{Soll}) des ersten Regelalgorithmus (I) im Eingriffspunkt (E) dem zweiten Subtrahier-Baustein (SB2) zugeführt werden, und in dem Eingriffspunkt (E) ein korrigierter Sollwert (25'_{Soll}) gebildet und der korrigierte Sollwert (25'_{Soll}) über einen Schalter (S) ausgegeben wird,
• wobei der Stellhub des Stellgliedes (25) der Turbine (10) unter Berücksichtigung dynamischer Zustände der Verbrennungskraftmaschine (100) im Eingriffspunkt (E) nur dann korrigiert wird, wenn die Ausgänge des primären Regelpfades a) und des sekundären Regelpfades b) aktiv geschaltet und der Schalter (S) geschlossen wird.

2. Verfahren nach Anspruch 1,
**dadurch gekennzeichnet, dass**
die Abgasgegendruck-Regelabweichung (ΔpT) in dem primären Regelpfad a) und die Ladedruck-Regelabweichung (ΔpL) in dem sekundären Regelpfad b) des zweiten Regelalgorithmus (II), nachdem sie jeweils einen vorgebbaren Schwellenwert je eines den Regelpfaden (a), b)) zugeordneten Hystereseblocks (HB1, HB2) überschritten haben, aktiv geschaltet und über eine "und"-Verknüpfung (&) auf den Schalter (S) des Eingriffspunktes (E) geführt werden.

3. Verbrennungskraftmaschine (100) eingerichtet zur Durchführung des Verfahrens nach mindestens einem der Ansprüche 1 und 2, umfassend einen Abgasturbolader (5, 10, 15) zur Verdichtung der der Verbrennungskraftmaschine (100) zugeführten Luft, einen Verdichter (5), einen Verbrennungsmotor (55) und eine Turbine (10) mit variabler Turbinengeometrie, die über eine Welle (15) mit dem Verdichter (5) verbunden ist, und eine Steuereinrichtung, in der ein computerlesbarer Programmalgorithmus zur Ausführung des Verfahrens und gegebenenfalls erforderliche Kennfelder gespeichert sind.

## Claims

1. Method for the operation of an internal combustion engine (100) with an exhaust gas turbocharger (5, 10, 15) for the compression of the air which is fed to the internal combustion engine (100), a drive output of a turbine (10) of the exhaust gas turbocharger (5, 10, 15) in an exhaust gas section (20) of the internal combustion engine (100) being changed by way of variation of a turbine geometry of the turbine (10), a setpoint boost pressure (pL_{Soll}) at the outlet of the compressor (5) of the exhaust gas turbocharger (5, 10, 15) in the air feed section (50) upstream of the combustion engine (55) being actuated in a first regulating algorithm (I) in a manner which is dependent on a setpoint exhaust gas back pressure (pT_{1Soll}) which is to be set in an exhaust gas section (20) downstream of the combustion engine (55) upstream of the turbine (10) of the internal combustion engine (100), the setpoint boost pressure (pL_{Soll}) being assigned an opening cross-sectional area of the turbine (10) which is actuated via an actuating stroke of an actuator (25) which is assigned to the turbine (10) in a manner which is dependent on a setpoint value (25_{Soll}) which is assigned to the predefined setpoint boost pressure (pL_{Soll}),
**characterized in that**
the actuator (25) of the turbine (10), which actuator (25) is actuated via the first regulating algorithm (I), is actuated via a second regulating algorithm (II) with specification of an upper limit value of the setpoint exhaust gas back pressure (pT_{1Soll}) in the exhaust gas section (20) upstream of the turbine (10) by way of intervention in the first regulating algorithm (I) by way of an adapted setpoint value (25'_{Soll}) if,
• in a primary regulating path a) of the second regulating algorithm (II), an exhaust gas back pressure regulating deviation (ΔpT) upstream of the turbine (10) occurs which is formed from an actual exhaust gas back pressure (pT_{1Soll}) upstream of the turbine (10) and the predefined setpoint exhaust gas back pressure (pT_{1Soll}) upstream of the turbine (10), and,
• in a secondary regulating path b) of the second regulating algorithm (II), a boost pressure regulating deviation (ΔpL) downstream of the compressor (5) occurs which is formed from an actual boost pressure (pLᵢₛₜ) of the compressor (5) and the setpoint boost pressure (pL_{Soll}) at the outlet of the compressor (5),
• in a first subtracting module (SB1) within the primary regulating path a) of the second regulating algorithm (II), the actual exhaust gas back pressure (pT₁ᵢₛₜ) upstream of the turbine (10) and the predefined setpoint exhaust gas back pressure (pT_{1Soll}) being fed in, and the exhaust gas back pressure regulating deviation (ΔpT) being determined,
• the exhaust gas back pressure regulating deviation (ΔpT) of the primary regulating path a) of the second regulating algorithm (II) being modified before it is fed to a second subtracting module (SB2) at the intervention point (E), the exhaust gas back pressure regulating deviation (ΔpT) being smoothed by means of a characteristic curve (K2) and being provided with a gain factor by means of a low pass filter in accordance with a characteristic curve (K3) in a manner which is dependent on an ambient pressure (pᵤ), with the result that a modified exhaust gas back pressure regulating deviation (ΔpT_{mod.}) is transferred at the intervention point (E) to the second subtracting module (SB2),
• the modified regulating deviation (ΔpT_{mod.}) and that setpoint value (25_{Soll}) of the first regulating algorithm (I) which is assigned to the predefined setpoint boost pressure (pL_{Soll}) being fed at the intervention point (E) to the second subtracting module (SB2), and a corrected setpoint value (25'_{Soll}) being formed at the intervention point (E), and the corrected setpoint value (25'_{Soll}) being output via a switch (S),
• the actuating stroke of the actuator (25) of the turbine (10) being corrected with consideration of dynamic states of the internal combustion engine (100) at the intervention point (E) only when the outputs of the primary regulating path a) and the secondary regulating path b) are switched to an active state and the switch (S) is closed.

2. Method according to Claim 1,
**characterized in that**
the exhaust gas back pressure regulating deviation (ΔpT) in the primary regulating path a) and the boost pressure regulating deviation (ΔpL) in the secondary regulating path b) of the second regulating algorithm (II), after they have in each case exceeded a predefined threshold value of in each case one hysteresis block (HB1, HB2) which is assigned to the regulating paths (a), b)), are switched to an active state and are routed via an "AND" operation (&) to the switch (S) of the intervention point (E) .

3. Internal combustion engine (100) set up for carrying out the method according to at least one of Claims 1 and 2, comprising an exhaust gas turbocharger (5, 10, 15) for the compression of the air which is fed to the internal combustion engine (100), a compressor (5), a combustion engine (55) and a turbine (10) with a variable turbine geometry, which turbine (10) is connected via a shaft (15) to the compressor (5), and a control device, in which a computer-readable program algorithm for carrying out the method and optionally required characteristic diagrams are stored.

## Revendications

1. Procédé servant à faire fonctionner une machine à combustion interne (100) équipée d'un turbocompresseur à gaz d'échappement (5, 10, 15) pour comprimer l'air amené à la machine à combustion interne (100), une puissance d'entraînement d'une turbine (10) du turbocompresseur à gaz d'échappement (5, 10, 15) dans un circuit de gaz d'échappement (20) de la machine à combustion interne (100) étant modifiée par la variation d'une géométrie de turbine de la turbine (10), dans lequel, dans un premier algorithme de régulation (I), une pression de suralimentation théorique (pL_{Soll}) à la sortie du compresseur (5) du turbocompresseur à gaz d'échappement (5, 10, 15) dans le circuit d'acheminement d'air (50) en amont du moteur à combustion interne (55) est pilotée en fonction d'une contrepression de gaz d'échappement théorique (pT_{1Soll}) à régler dans un circuit de gaz d'échappement (20) en aval du moteur à combustion interne (55) avant la turbine (10) de la machine à combustion interne (100), la pression de suralimentation théorique (pL_{Soll}) étant associée à une superficie de la section d'ouverture de la turbine (10) qui est pilotée par l'intermédiaire d'une course de réglage d'un actionneur (25) associé à la turbine (10) en fonction d'une valeur théorique (25_{Soll}) associée à la pression de suralimentation théorique prédéfinie (pL_{Soll}),
**caractérisé en ce que** l'actionneur (25) de la turbine (10), piloté par l'intermédiaire du premier algorithme de régulation (I), est piloté par l'intermédiaire d'un deuxième algorithme de régulation (II) en spécifiant une valeur limite supérieure de la contrepression de gaz d'échappement théorique (pT_{1Soll}) dans le circuit de gaz d'échappement (20) en amont de la turbine (10) par une intervention sur le premier algorithme de régulation (I) avec une valeur théorique adaptée (25'_{Soll}), si
• sur un chemin de régulation primaire a) du deuxième algorithme de régulation (II), un écart de régulation de contrepression de gaz d'échappement (ΔpT) survient en amont de la turbine (10) qui est formé par une contrepression de gaz d'échappement réelle (pT_{1Ist}) en amont de la turbine (10) et la contrepression de gaz d'échappement théorique prédéfinie (pT_{1Soll}) en amont de la turbine (10), et
• sur un chemin de régulation secondaire b) du deuxième algorithme de régulation (II), un écart de régulation de pression de suralimentation (ΔpL) survient en aval du compresseur (5) qui est formé par une pression de suralimentation réelle (pL_{Ist}) du compresseur (5) et la pression de suralimentation théorique (pL_{Soll}) à la sortie du compresseur (5),
• dans lequel, dans un premier module de soustraction (SB1), à l'intérieur du chemin de régulation primaire a) du deuxième algorithme de régulation (II), la contrepression de gaz d'échappement réelle (pT_{1Ist}) en amont de la turbine (10) et la contrepression de gaz d'échappement théorique prédéfinie (pT_{1Soll}) sont amenées, et l'écart de régulation de contrepression de gaz d'échappement (ΔpT) est déterminé,
• l'écart de régulation de contrepression de gaz d'échappement (ΔpT) du chemin de régulation primaire a) du deuxième algorithme de régulation (II) étant modifié avant qu'il ne soit amené à un deuxième module de soustraction (SB2) au point d'intervention (E), l'écart de régulation de contrepression de gaz d'échappement (ΔpT) étant lissé au moyen d'une courbe caractéristique (K2) et doté d'un facteur d'amplification au moyen d'un filtre passe-bas selon une courbe caractéristique (K3) en fonction d'une pression ambiante (p_{U}) de sorte que le deuxième module de soustraction (SB2) reçoit au point d'intervention (E) un écart de régulation de contrepression de gaz d'échappement modifié (ΔpT_{mod.}),
• l'écart de régulation modifié (ΔpT_{mod.}) et la valeur théorique (25'_{Soll}) associée à la pression de suralimentation théorique prédéfinie (pL_{Soll}) du premier algorithme de régulation (I) sont amenées au deuxième module de soustraction (SB2) au niveau du point d'intervention (E), et une valeur théorique corrigée (25'_{Soll}) est formée au point d'intervention (E), et la valeur théorique corrigée (25'_{Soll}) est sortie par l'intermédiaire d'un commutateur (S),
• la course de réglage de l'actionneur (25) de la turbine (10) n'étant corrigé en tenant compte des états dynamiques de la machine à combustion interne (100) au point d'intervention (E) que si les sorties du chemin de régulation primaire a) et du chemin de régulation secondaire b) sont activées et le commutateur (S) est fermé.

2. Procédé selon la revendication 1, **caractérisé en ce que** l'écart de régulation de contrepression de gaz d'échappement (ΔpT) sur le chemin de régulation primaire a) et l'écart de régulation de pression de suralimentation (ΔpL) sur le chemin de régulation secondaire b) du deuxième algorithme de régulation (II), une fois qu'ils ont dépassé respectivement une valeur seuil prédéfinissable respectivement d'un bloc d'hystérèse (HB1, HB2) associé aux chemins de régulation (a), b)), sont activés et amenés par une liaison ET (&) sur le commutateur (S) du point d'intervention (E).

3. Machine à combustion interne (100), aménagée pour exécuter le procédé selon au moins l'une des revendications 1 et 2, comprenant un turbocompresseur à gaz d'échappement (5, 10, 15) pour comprimer l'air amené à la machine à combustion interne (100), un compresseur (5), un moteur à combustion interne (55) et une turbine (10) à géométrie de turbine variable qui est reliée au compresseur (5) par un arbre (15), et un dispositif de commande sur lequel sont stockés un algorithme de programme lisible par ordinateur pour exécuter le procédé et éventuellement des diagrammes caractéristiques nécessaires.
